# EUROPÄISCHE PATENTSCHRIFT

(11) **EP 3 783 419 B1**
(45) Veröffentlichungstag und Bekanntmachung des Hinweises auf die Patenterteilung: **08.06.2022**
(21) Anmeldenummer: 19192446.3
(22) Anmeldetag: 20.08.2019
(51) Int. Cl.: G02C 1/04

(54) **BRILLE**
SPECTACLES
LUNETTES

(43) Veröffentlichungstag der Anmeldung: 24.02.2021
(73) Patentinhaber: MPG GmbH, 8041 Graz (AT)
(72) Erfinder: Barizza, Stefano, 8041 Graz (AT)
(74) Vertreter: Patentanwaltskanzlei Matschnig & Forsthuber OG

(56) Entgegenhaltungen:
- EP-A1- 2 159 623
- DE-U1-202016 106 911
- US-A1- 2015 098 054

## Beschreibung

Die Erfindung betrifft eine Brille, umfassend
- zumindest ein Brillenglas mit einem linken und einem rechten Brillenglasabschnitt,
- eine Rahmeneinrichtung, welche ein linkes und ein rechtes Rahmenteil umfasst, wobei die Rahmeneinrichtung in mechanischem Eingriff mit dem zumindest einen Brillenglas steht und das linke Rahmenteil dem linken Brillenglasabschnitt sowie das rechte Rahmenteil dem rechten Brillenglasabschnitt zugeordnet ist,
- wobei jedes Rahmenteil einen Befestigungsabschnitt mit einer
   Befestigungsausnehmung aufweist, in welche Befestigungsausnehmung zumindest ein an einem lateralen Ende des jeweiligen Brillenglasabschnittes angeordnetes Passteil eingreift.

Aus dem Stand der Technik sind bereits zahlreiche Brillenausführungen bekannt, bei denen einzelne Rahmenteile und - je nach Ausführung - wahlweise ein durchgehendes, einstückiges Brillenglas oder aber zwei separate Brillengläser mechanisch zusammensteckbar sind. Dies hat den Vorteil, dass im Falle der Beschädigung von Brillenglas und/oder Rahmenteil die jeweiligen Einzelteile der Brille einfach und kostengünstig ausgewechselt werden können. Insbesondere bei Sportbrillen, die aufgrund der hohen mechanischen Belastungen, denen sie beim Tragen während einer sportlichen Betätigung des Benutzers ausgesetzt sind, ist dies von Vorteil. Überdies können Brillenteile, die mittels Steckverbindungen, die ohne spezielles Werkzeug von jedermann miteinander zu einer Brille verbindbar sind, auch besonders flexibel an aktuelle Designs und/oder Farbstellungen angepasst werden.

US 2015098054, DE 2020 16106911U oder EP 2159623 sind entsprechende Beispiele.

Beispielsweise ist aus dem Dokument EP 2 159 623 B1 eine Sportbrille mit einem durchgehenden Brillenglas bekannt geworden, bei der ein Paar von elastisch verformbaren linken und rechten Rahmenteilen samt den daran angeordneten Bügeln mittels einer Steckverbindung am Brillenglas befestigbar ist. Die Nasenauflagen bzw. Nasenpads sind direkt in einer Nasenausnehmung des Brillenglases an der Unterseite des Brillenglases befestigt.

Ein geringes Gewicht und das damit verbundene Gefühl eines bequemen Sitzes gelten allgemein als wichtiges Kriterium einer Brille, insbesondere einer Sportbrille. Eine Brille darf auf keinen Fall bei langem Tragen als störend empfunden werden.

Nachteilig an der aus der EP 2 159 623 B1 bekannt gewordenen Ausführung einer Sportbrille sowie bei den derzeit bekannten Sportbrillen ist zumindest, dass bei einer äußeren Krafteinwirkung auf die Brille beispielsweise bei einem Aufprall oder bei schüttel- und/oder ruckartigen Bewegungen während einer sportlichen Betätigung des Brillenträgers die gesamte Gewichtskraft der Brille ungedämpft auf die Nasenauflagen und somit auf die Nase des Trägers der Brille einwirkt. Dies führt üblicherweise bei längerem Tragen einer Brille während einer körperlichen Betätigung bzw. während der Ausübung von sportlichen Aktivitäten zu Ermüdungserscheinungen und Druckstellen im Bereich der Nasenauflagen, die für den Benutzer der Brille unangenehm sind.

Es ist die Aufgabe der vorliegenden Erfindung, eine verbesserte Brille bereitzustellen, die die aus dem Stand der Technik bekannten Nachteile von Brillen, insbesondere von Sportbrillen, vermeidet, und die einen erhöhten Tragekomfort sowie ein längeres, schmerzfreies Tragen der Brille auch während körperlicher Betätigung des Benutzers bzw. Trägers der Brille gewährleistet.

Diese Aufgabe wird bei einer gattungsgemäßen Brille durch die im kennzeichnenden Teil von Anspruch 1 angegebenen Merkmale gelöst. Besonders vorteilhafte, bevorzugte Ausführungen und Weiterbildungen der Erfindung sind Gegenstand der Unteransprüche.

Eine erfindungsgemäße Brille umfasst:
- zumindest ein Brillenglas mit einem linken und einem rechten Brillenglasabschnitt,
- eine Rahmeneinrichtung, welche ein linkes und ein rechtes Rahmenteil umfasst, wobei die Rahmeneinrichtung in mechanischem Eingriff mit dem zumindest einen Brillenglas steht und das linke Rahmenteil dem linken Brillenglasabschnitt sowie das rechte Rahmenteil dem rechten Brillenglasabschnitt zugeordnet ist,
- wobei jedes Rahmenteil einen Befestigungsabschnitt mit einer
   Befestigungsausnehmung aufweist, in welche Befestigungsausnehmung zumindest ein an einem lateralen Ende des jeweiligen Brillenglasabschnittes angeordnetes Passteil eingreift, wobei
- jedes Rahmenteil jeweils ein elastisch federndes Dämpfungselement aufweist, wobei jedes Dämpfungselement jeweils an einem Befestigungsabschnitt befestigt ist und sich in nasaler Richtung der Brille verlaufend entlang eines unteren Randes des jeweiligen Brillenglasabschnitts sowie vom unteren Rand unter Bildung eines variablen Spaltabstands beabstandet bis zu einem nasalen Rahmenende erstreckt, wobei
- jedes Dämpfungselement zumindest in einer Richtung elastisch flexibel auslenkbar ist und wobei
- an jedem der nasalen Rahmenenden jeweils eine Nasenauflage angeordnet ist, welche Nasenauflage dazu eingerichtet ist, in einer Trageposition der Brille an der Nase eines Benutzers anzuliegen und den jeweiligen Rahmenteil abzustützen.

Generell wird im Weiteren die Zuordnung der Begriffe hinsichtlich eines Ortes oder einer Orientierung, wie beispielsweise "horizontal", "vertikal", "in horizontaler Richtung", "in vertikaler Richtung", "oben", "unten", "vorne", "darunter", "darüber" etc. lediglich zur Vereinfachung gewählt und diese Begriffe beziehen sich möglicherweise auf die Darstellung in den Zeichnungen, nicht jedoch notwendigerweise auf eine aktuelle Gebrauchslage oder Trageposition der Brille.

Auch die in der vorliegenden Anmeldung verwendeten anatomischen Lage- und Richtungsbezeichnungen dienen bloß zur Vereinfachung der Beschreibung der Trageposition der erfindungsgemäßen Brille in ihrer bestimmungsgemäßen Lage an der Vorderseite des Kopfes eines Benutzers bzw. Brillenträgers. So steht der Begriff einer "nasalen" Richtung allgemein für "nasenwärts", also medial zur in der Kopfmitte gelegenen Nase hinweisend. Der Begriff einer "temporalen" Richtung bedeutet allgemein in Richtung zur Schläfe hin, also seitlich bzw. lateral am Kopf. Eine "obere" bzw. superiore Richtung bedeutet allgemein nach oben weisend und eine "untere" bzw. inferiore Richtung bedeutet allgemein nach unten weisend.

Je nach Ausführung der erfindungsgemäßen Brille weist diese zumindest ein Brillenglas mit einem linken und einem rechten Brillenglasabschnitt auf. Der Begriff "Brillenglas" schließt auch eine oder mehrere Brillenscheiben, die beispielsweise aus einem bruchfesten, transparenten Kunststoff gefertigt ist bzw. sind, mit ein. In einer alternativen Ausführung kann die Brille anstelle eines durchgehenden Brillenglases bzw. einer durchgehenden Brillenscheibe auch zwei voneinander getrennte Brillengläser aufweisen. Der im Weiteren gewählte Begriff eines linken und eines rechten Brillenglasabschnitte bezieht sich daher gleichermaßen auf Abschnitte eines einstückigen Brillenglases bzw. einer einstückigen Brillenscheibe ebenso wie auf ein linkes bzw. ein davon getrenntes rechtes Brillenglas im Ausführungsfall einer Brille mit zwei voneinander getrennten Brillengläser. Dies ist dem Fachmann auf dem Gebiet von Brillen hinlänglich bekannt.

Üblicherweise sind bei Brillen generell die einzelnen linken bzw. rechten Bauteile wie Rahmenteile oder Brillenbügel jeweils paarweise spiegelsymmetrisch gestaltet. Allerdings können bei einer optischen Brille der linke und der rechte Brillenglasabschnitt bzw. in einer Ausführung mit zwei voneinander separaten Brillengläsern entsprechend das linke und das rechte Brillenglas beispielsweise voneinander unterschiedliche optische Linsen mit gleicher oder unterschiedlicher Dioptrie-Zahl aufweisen, um individuelle Sehschwächen des Benutzers ausgleichen zu können. Auch dies ist dem Fachmann hinlänglich bekannt.

Die erfindungsgemäße Brille weist weiters eine Rahmeneinrichtung auf, welche ein linkes und ein rechtes Rahmenteil umfasst, wobei die Rahmeneinrichtung in mechanischem Eingriff mit dem zumindest einen Brillenglas steht und das linke Rahmenteil dem linken Brillenglasabschnitt sowie das rechte Rahmenteil dem rechten Brillenglasabschnitt zugeordnet ist. Je nach Ausführung können das linke und das rechte Rahmenteil jeweils einteilig oder mehrteilig gefertigt sein. Beispielsweise können ein linker und ein rechter Brillenbügel am jeweils korrespondierenden Rahmenteil starr, federnd flexibel oder mittels entsprechender Bügelscharniere gelenkig beweglich befestigt sein. Ebenso können Brillenbügel als separate Bauteile an den jeweiligen Rahmenteilen der Brille befestigt sein. Beispielsweise kann eine solche Befestigung des Brillenbügels am jeweils zugeordneten Rahmenteil mittels einer an sich bekannten Gelenksverbindung in Form eines Bügelscharniers unter Zuhilfenahme einer Schraube, eines Pins oder eines Gelenksbolzen erfolgen. Ebenso kann bei einer erfindungsgemäßen Brille eine Rahmeneinrichtung vorgesehen sein, bei der das linke und das rechte Rahmenteil miteinander verbunden sind. Beispielsweise kann dazu zumindest ein Nasensteg und/oder ein Verbindungssteg entlang des oberen Rands des zumindest einen Brillenglases zur Verbindung von linkem und rechtem Rahmenteil dienen. All diese unterschiedlichen Ausführungsformen sind von der vorliegenden Erfindung mit umfasst.

Erfindungsgemäß weist jedes Rahmenteil einen Befestigungsabschnitt mit einer Befestigungsausnehmung auf, in welche Befestigungsausnehmung zumindest ein an einem lateralen Ende des jeweiligen Brillenglasabschnittes angeordnetes Passteil eingreift. Vorteilhaft kann das zumindest eine Brillenglas mit jedem Rahmenteil mechanisch verbunden und auch wieder getrennt werden. Je nach Ausführungsvariante können dazu lösbare formschlüssige und/oder kraftschlüssige Verbindungen dienen, um ein oder mehrere Passteile an dem lateralen Ende der jeweiligen Brillenglasabschnitte bzw. der jeweiligen separaten beiden Brillengläser mit dem jeweils korrespondierenden Rahmenteil lösbar zu verbinden. Beispielhaft können solche lösbaren Befestigungen des zumindest einen Brillenglases mit dem jeweiligen Rahmenteil als eine Nut-Feder-Verbindung, eine Passfederverbindung, eine Schwalbenschwanzverbindung, eine Steckverbindung, eine Schraubverbindung oder eine Klemmverbindung ausgeführt sein.

Jedes Rahmenteil weist bei einer erfindungsgemäßen Brille jeweils ein elastisch federndes Dämpfungselement auf, wobei jedes Dämpfungselement jeweils an einem Befestigungsabschnitt des jeweiligen Rahmenteils befestigt ist und sich in nasaler Richtung der Brille verlaufend entlang eines unteren Randes des jeweiligen Brillenglasabschnitts sowie von diesem unteren Rand unter Bildung eines variablen Spaltabstands beabstandet bis zu einem nasalen Rahmenende erstreckt, wobei jedes Dämpfungselement zumindest in einer Richtung elastisch flexibel auslenkbar ist und wobei an jedem der nasalen Rahmenenden jeweils eine Nasenauflage angeordnet ist, welche Nasenauflage dazu eingerichtet ist, in einer Trageposition der Brille an der Nase eines Benutzers anzuliegen und den jeweiligen Rahmenteil abzustützen.

Die Dämpfungselemente bieten als wesentlichen Vorteil der erfindungsgemäßen Brille eine besonders wirksame und komfortable Dämpfung der Brille bei Erschütterungen, wie diese insbesondere bei Sportarten wie beim Mountainbiken, Laufen oder Schifahren üblicherweise auftreten. Weiters ist von Vorteil, dass die frei schwingbaren Dämpfungselemente, die als Verbindungselemente zwischen dem Befestigungsabschnitt jedes Rahmenteils, der jeweils mit dem Brillenglas in Verbindung steht, und den Nasenauflagen dienen, eine besonders flexible, individuell anpassbare Fixierung und Ausrichtung der Nasenauflagen und damit der gesamten Brille in Trageposition an der Nase des jeweiligen Benutzers ermöglichen. Unangenehme Druckstellen der Nasenauflagen, die beim längeren Tragen von Brillen, insbesondere von Sportbrillen, während sportlicher Aktivitäten bisher unweigerlich aufgetreten sind, können so besonders effektiv verhindert werden.

Jedes Dämpfungselement ist vom unteren Rand bzw. von der unteren Konturlinie des zumindest einen Brillenglases unter Bildung eines variablen Spaltabstands beabstandet. Auch die nasalen Rahmenenden sowie die Nasenauflagen sind vom zumindest einen Brillenglas beabstandet und sind nicht direkt mit dem Brillenglas bzw. mit der Brillenscheibe verbunden. Damit können vorteilhaft das jeweilige Dämpfungselement und das Brillenglas unabhängig voneinander sowie relativ zueinander schwingen, um bei einem Aufprall oder bei ruckartigen Bewegungen während des Tragens der Brille die dabei auftretenden Kräfte effizient abzubauen und zu dämpfen. Zweckmäßig sind die Nasenauflagen aus einem besonders hautfreundlichen, rutschfesten Material hergestellt und so gestaltet, dass diese beispielsweise mittels entsprechender Formeinlagen an die jeweilige individuelle Anatomie der Nase eines Benutzers angepasst werden können.

Die Dämpfungselemente erhöhen wesentlich den Tragekomfort der Brille, insbesondere bei ruckartigen Bewegungen oder Rüttelbewegungen kann das zumindest eine Brillenglas der Brille zumindest in vertikale Richtung - ausgehend von der Trageposition der Brille-schwingen, wodurch der Druck von den Nasenauflagen abgefedert bzw. genommen wird.

Je nach Ausführung können bei einer erfindungsgemäßen Brille die Dämpfungselemente einstückig mit dem Befestigungsabschnitt des jeweiligen Rahmenteils, der an ihrem einem Ende angrenzt und an dem die Dämpfungselemente befestigt sind, verbunden sein. Alternativ dazu können die Dämpfungselemente auch als Verbindungselemente zwischen dem Befestigungsabschnitt jedes Rahmenteils und dem nasalen Rahmenende bzw. den Nasenauflagen als eigene, diskrete Bauteile eingebaut sein und beispielsweise aus einem anderen Material als die angrenzenden Teile jedes Rahmenteils gefertigt sein. Beispielsweise kann es im Rahmen der Erfindung weiters vorgesehen sein, dass die Dämpfungselemente als diskrete Bauteile aus einem besonders flexiblen Material mit einer höheren dynamischen Festigkeit bzw. Wechselbiegebelastbarkeit hergestellt sind als die daran angrenzenden Teile jedes Rahmenteils.

Die frei schwingbaren Dämpfungselemente sind also vorteilhaft nur an ihrem einen Ende am jeweiligen Befestigungsabschnitt des jeweiligen Rahmenteils befestigt. An ihrem in Längsrichtung der Dämpfungselemente gegenüberliegenden anderen Ende, welches in Trageposition am Kopf eines Benutzers der Brille jeweils zur Nase des Brillenträgers hinweist, sind an den nasalen Rahmenenden jeweils die frei schwingenden Nasenauflagen vorgesehen. Aufgrund der Freistellung der Dämpfungselemente sowie der daran befestigten Nasenauflagen von dem zumindest einen Brillenglas können die Dämpfungselemente samt den Nasenauflagen relativ zum Brillenglas frei schwingen und dadurch besonders effektiv Stöße und ruckartige Bewegungen Brille während des Tragens abfedern und dämpfen.

Besonders vorteilhaft kann bei einer erfindungsgemäßen Brille das Brillenglas einstückig gefertigt sein, wobei der linke und der rechte Brillenglasabschnitt miteinander verbunden sind. Diese Ausführungsvariante bietet insbesondere für Sportbrillen den Vorteil, dass die Brille aufgrund des einstückigen Brillenglases besonders robust aufgebaut ist. Ein weiterer Vorteil einer solchen Ausführung mit einem einstückigen Brillenglas besteht darin, dass das Sichtfeld des Benutzers aufgrund der durchgehenden Scheibe nicht beeinträchtigt wird. Allfällige Verbindungselemente, wie sie üblicherweise zur Verbindung von zwei getrennten Brillengläsern beispielhaft als Nasensteg erforderlich sind, können vorteilhaft bei einer Brille mit einem einstückigen Brillenglas entfallen. Eine solche Brille kann daher insbesondere beim Einsatz eines Kunststoffglases besonders leicht gebaut sein, was aufgrund des geringen Eigengewichtes wiederum den Tragekomfort der Brille weiter erhöht.

In einer alternativen Ausführungsform einer erfindungsgemäßen Brille können zwei separate Brillengläser vorgesehen sein, wobei der linke und der rechte Brillenglasabschnitt in dieser Variante als separate Brillengläser ausgeführt sind, die vorzugsweise mit zumindest einem dazwischenliegenden Nasensteg miteinander verbunden sind.

Diese Ausführungsvariante mit zwei voneinander getrennten, separaten Brillengläsern, die mit einem oder mit mehreren an sich üblichen Nasenstegen miteinander verbunden sein können, bietet den Vorteil, auch elegantere, weniger sportliche Brillen mit den besonders komfortablen, mittels der Dämpfungselemente frei schwingbaren Nasenauflagen zu kombinieren. Gegebenenfalls können die zwei getrennten Brillengläser auch zumindest abschnittsweise einen Brillenrahmen aufweisen. Somit sind den gestalterischen Möglichkeiten, unterschiedliche Brillendesigns mit den erfindungsgemäßen elastisch federnden Dämpfungselementen an der Unterseite der Brillengläser zu kombinieren, keine Grenzen gesetzt.

In einer weiteren zweckmäßigen Ausführung können bei einer Brille gemäß der Erfindung das linke und das rechte Rahmenteil als separate Rahmenteile, vorzugsweise als spiegelsymmetrisch gestaltete separate Rahmenteile, ausgebildet sein. In dieser Ausführungsvariante sind die beiden Rahmenteile voneinander getrennt an den einander gegenüberliegenden lateralen Enden des jeweiligen Brillenglasabschnittes befestigt. Die beiden Rahmenteile sind nur mittels des dazwischenliegenden zumindest einen Brillenglases miteinander verbunden. Verbindungs- oder Nasenstege im Bereich des oberen Randes des Brillenglases sind nicht erforderlich. Vorteilhaft kann in dieser Ausführung das Gewicht der Brille weiter reduziert werden. Auch das Abnehmen und Austauschen der voneinander getrennten linken und rechten Rahmenteile vom zumindest einen Brillenglas ist in dieser Variante besonders einfach möglich.

Besonders vorteilhaft kann es sein, wenn bei einer erfindungsgemäßen Brille die Rahmenteile ausschließlich an den lateralen Enden der jeweiligen Brillenglasabschnitte oder Brillengläser befestigt sind. In dieser Ausführung können die Befestigungsabschnitte an den Rahmenteilen zum Befestigen der Brillenglasabschnitte besonders klein dimensioniert sein. Im Extremfall können die Befestigungsabschnitte an den Rahmenteilen gleichsam punktförmig gestaltet sein. Eine solche besonders kompakte Befestigung des Brillenglases bzw. der Brillengläser an den Rahmenteilen ermöglicht eine weitere Gewichtsreduktion der Brille infolge von Materialeinsparung für die Rahmenteile.

In einer weiteren vorteilhaften Gestaltungsform der erfindungsgemäßen Brille kann vorgesehen sein, dass die Dämpfungselemente in einer Trageposition in Ruhelage der Brille die jeweiligen Brillenglasabschnitte oder Brillengläser nicht berühren. In dieser Ausführung sind die Dämpfungselemente so weit von den unteren Rändern bzw. den unteren Konturlinien des zumindest einen Brillenglases beabstandet, dass diese in einer Trageposition der Brille am Kopf des Trägers das zumindest eine Brillenglas nicht berühren. Zweckmäßig sind auch die an die Dämpfungselemente anschließenden nasalen Rahmenenden samt den daran angeordneten Nasenauflagen entsprechend von den unteren Rändern bzw. den unteren Konturlinien des zumindest einen Brillenglases beabstandet. Je nach Geometrie der Ausführung und gewählten Abständen zwischen dem jeweiligen Dämpfungselement und dem unteren Glasrand kann diese Bedingung nicht nur in einer unbelasteten Trageposition in Ruhelage, also bei ruhigem, erschütterungsfreien Tragen der Brille, sondern auch in einer belasteten Trageposition während einer äußeren Krafteinwirkung wie beispielsweise eines Impulses infolge einer Erschütterung der Brille erfüllt sein.

In einer Fortbildung der Erfindung kann vorgesehen sein, dass bei der Brille die Rahmenteile an ihren nasalen Rahmenenden mit einem Mittelstück, vorzugsweise mit einem elastischen Mittelstück, miteinander verbunden sind. Diese Ausführung bietet den Vorteil, dass die beiden nasalen Rahmenenden mit den daran angeordneten Nasenauflagen keine freien Enden bilden, sondern durch ein Mittelstück möglichst elastisch beweglich miteinander verbunden sind. Insbesondere bei Sportbrillen bietet diese Ausführung den Vorteil einer verringerten Verletzungsgefahr, da das verbindende Mittelstück die freien Enden der beiden nasalen Rahmenenden vergleichbar mit einem Schutzbügel schützt. Bei besonders starken Erschütterungen der Brille sichert ein solches Mittelstück überdies die Position der Nasenauflagen auf der Nase des Benutzers und verringert die Gefahr des ungewollten Verrutschens der Nasenauflagen. Als weiterer Vorteil dieser Ausführungsvariante sei genannt, dass am verbindenden Mittelstück beispielsweise ein optischer Clip, also eine Zusatzscheibe mit einer optischen Sehkorrektur, angesteckt werden kann. Ebenso kann beispielsweise eine getönte, abgedunkelte Zusatzscheibe am Mittelstück angesteckt werden.

In einer besonders robusten Ausführung der erfindungsgemäßen Brille können die Rahmenteile und/oder die elastisch federnden Dämpfungselemente aus einem Material hergestellt sein, welches einen Zug-E-Modul von 1200 bis 7000 MPa, vorzugsweise von 1400 bis 3500 MPa, insbesondere von 1600 MPa, aufweist.

Der Zug-E-Modul-Wert drückt das Verhältnis zwischen der Zugspannung und der Zugdehnung eines Materials, insbesondere eines Kunststoffmaterials, aus. Der E-Modul bzw. Elastizitätsmodul gibt damit Auskunft über die Steifigkeit eines Materials und ist umso größer, je kleiner die Verformung ist, die ein getesteter Probekörper unter einer bestimmten Last erfährt.

Zweckmäßig können bei einer erfindungsgemäßen Brille die Rahmenteile und/oder die elastisch federnden Dämpfungselemente aus einem besonders formstabilen Material hergestellt sein, welches eine Streckspannung von 30 bis 130 MPa, vorzugsweise von 40 bis 100 MPa, insbesondere von 60 MPa, aufweist. Die Streckspannung dient bei Kunststoffen zur Bestimmung der Zugeigenschaften und gibt den ersten Spannungswert an, bei dem ein Zuwachs der Dehnung ohne Steigerung der Spannung auftritt. Bei Kunststoffen kann allerdings auch bei Spannungen unterhalb der Streckspannung bereits eine bleibende Verformung stattfinden. Eine hohe Streckspannung weist auf ein festes, starkes Material hin.

Vorteilhaft können bei einer erfindungsgemäßen Brille die Rahmenteile und/oder die elastisch federnden Dämpfungselemente aus einem formstabilen Material hergestellt sein, welches eine Streckdehnung von 2 bis 8 %, vorzugsweise von 3 bis 7 %, insbesondere von 6 %, aufweist.

In einer weiteren, besonders widerstandsfähigen Ausführung der erfindungsgemäßen Brille können die Rahmenteile und/oder die elastisch federnden Dämpfungselemente aus einem bruchfesten Material hergestellt sein, welches eine Bruchspannung von 30 bis 120 MPa, vorzugsweise von 45 bis 60 MPa, aufweist.

Eine erfindungsgemäße Brille kann besonders robust gestaltet werden, wenn die Rahmenteile und/oder die elastisch federnden Dämpfungselemente aus einem bruchfesten Material hergestellt sind, welches eine Bruchdehnung größer als 2 %, vorzugsweise größer als 10 %, insbesondere größer als 50 %, aufweist.

Beispielhaft seien die folgenden Kunststoffe genannt, welche eine oder mehrere der vorgenannten Materialeigenschaften erfüllen können: Hochleistungskunststoffe wie Polyetherimide oder Polyamide sowie ABS-Kunststoffe.

Als Vertreter der Polyetherimide (kurz: PEI), die zu den Polyimiden zählen, seien Kunststoffe genannt, die unter dem Markennamen Ultem^{®} beispielsweise in den Varianten Ultem^{®} 1000 oder Ultem^{®} 2300 im Handel erhältlich sind.

Acrylnitril-Butadien-Styrol-Copolymerisat-Kunststoffe (kurz: ABS) sind vergleichsweise günstige Kunststoffe, die aufgrund ihrer hohe Schlag- und Kerbschlagzähigkeit sowie ihrer hohen Steifigkeit ebenfalls zur Fertigung von Rahmenteilen und/oder elastisch federnden Dämpfungselementen verwendet werden können.

Zweckmäßig können bei einer Brille gemäß der Erfindung die Rahmenteile und/oder die elastisch federnden Dämpfungselemente aus einem witterungsbeständigen Polyamidkunststoff, vorzugsweise einem cycloaliphatischen Polyamidkunststoff, hergestellt sein.

Die Bezeichnung Polyamide wird üblicherweise als Bezeichnung für synthetische, technisch verwendbare thermoplastische Kunststoffe verwendet. Polyamide werden wegen ihrer hervorragenden Festigkeit und Zähigkeit oft als Konstruktionswerkstoffe verwendet.

In Voruntersuchungen hat sich gezeigt, dass transparente Polyamidkunststoffe, die unter dem Markennamen Grilamid TR^{®} von EMS-GRIVORY hergestellt werden und frei am Markt verfügbar sind, besonders vorteilhaft als Werkstoff für die Fertigung der Rahmenteile und/oder der elastisch federnden Dämpfungselemente verwendet werden können. Grilamid TR^{®} weist im Vergleich zu anderen transparenten Polymeren eine beachtenswert niedrige Dichte auf. Es ist der leichteste technische Thermoplast.

Insbesondere der Polyamidkunststoff mit dem Markennamen Grilamid TR 90^{®} hat sich besonders vorteilhaft für den Einsatz als Werkstoff für die Rahmenteile und/oder die elastisch federnden Dämpfungselemente erwiesen. Grilamid TR 90^{®} ist ein Homopolyamid und besitzt eine außergewöhnlich gute dynamische Festigkeit: Dieses Material hat eine Dauerschwingfestigkeit von mehr als 30 MPa und erreicht selbst bei einer Wechselbiegebelastung von +/- 50 MPa noch eine Million Wechselbiege-Zyklen bei Lastwechsel. Der Zug-E-Modul von Grilamid TR 90^{®} beträgt 1600 MPa, die Streckspannung etwa 60 MPa und die Streckdehnung beträgt rund 6%. Seine nominelle Bruchdehnung beträgt mehr als 50%, weshalb dieses Material auch besonders zäh ist. Überdies beträgt die Dichte von Grilamid TR 90^{®} nur 1g/cm³. Je nach Gestaltung der Brillenfassung bzw. der Rahmenteile kann mit diesem ausgewählten Werkstoff eine Rahmeneinrichtung bereitgestellt werden, die äußerst leicht ist und insgesamt etwa nur 30 g wiegt.

Neben den mechanischen Eigenschaften wie hohe Festigkeit, Steifigkeit und Duktilität weist dieser Kunststoff hohe chemische Beständigkeit gegen Kosmetika, Hautschweiß und diverse Lacke auf. Der Kunststoff ist frei von Weichmachern.

Als bevorzugtes Material zur Herstellung des Brillenglases werden meist thermoplastische Polycarbonat-Kunststoffe verwendet, da diese eine hohe Festigkeit, Schlagzähigkeit, Steifigkeit und Härte aufweisen. Mittels geeigneter Lack-Beschichtungen oder im Verbund mit transparenten thermoplastischen Polyurethanen lassen sich aus Polycarbonat leichte, UV-Licht-beständige Scheiben herstellen, die für Brillengläser und auch für optische Linsen aus Kunststoff bestens geeignet sind. Alternativ können zur Herstellung des Brillenglases auch andere transparente Kunststoffe wie beispielsweise Polymethylmethacrylat (kurz: PMMA) verwendet werden.

Besonders vorteilhaft kann es sein, wenn bei einer erfindungsgemäßen Brille die federnden Dämpfungselemente in einer Trageposition der Brille am Kopf eines Benutzers ausgehend von dem jeweiligen Befestigungsabschnitt zuerst entgegen einer temporalen Richtung seitlich am Kopf des Benutzers nach unten und anschließend in eine nasale Richtung zur Nase des Benutzers hin verlaufen, sodass in einer Trageposition der Brille die Dämpfungselemente jeweils einen unteren Rahmenabschnitt für das zumindest eine Brillenglas bilden, ohne mit diesem verbunden zu sein. Vorteilhaft können die Dämpfungselemente in dieser Variante beispielsweise gekrümmt oder gebogen sein und im Wesentlichen der Kontur des unteren sowie zumindest teilweise auch des lateralen Randes des jeweiligen Brillenglasabschnittes folgen, ohne jedoch am Brillenglas befestigt zu sein. Je größer die freigestellte Baulänge der frei federnden bzw. frei schwingenden Dämpfungselemente ist, umso höhere Dämpfungswirkungen können erzielt werden.

Dieser untere Rahmenabschnitt bildet ausgehend vom Befestigungsabschnitt die Fortsetzung des jeweiligen Rahmenteils, wobei der untere Rahmenabschnitt von den Brillengläsern beabstandet ist und kein direkter Kontakt zu den jeweiligen Brillengläsern besteht. Dieser untere Rahmenabschnitt endet bei den Nasenauflagen bzw. dem jeweiligen nasalen Ende der Federelemente.

Um eine ausreichende Federwirkung im Belastungsfall bei Stößen oder einem Aufprall auf die Brille zu gewährleisten, kann es zweckmäßig sein, wenn bei einer erfindungsgemäßen Brille die federnden Dämpfungselemente jeweils eine frei schwingende Länge von 60 bis 100 mm, vorzugsweise von 70 bis 90 mm, aufweisen.

Beim unbelasteten Tragen der Brille ohne von außen einwirkende Stoß- oder Erschütterungskräfte können die Abstände zwischen der Unterkante des zumindest einen Brillenglases und dem jeweiligen Dämpfungselement beispielsweise 2 mm und bei den Nasenauflagen beispielsweise 3 mm betragen. Im belasteten Zustand unter Einwirkung einer äußeren Kraft während einer Erschütterung der Brille kann der Abstand zwischen der Unterkante des Brillenglases und dem jeweiligen Dämpfungselement bzw. der jeweiligen Nasenauflage auf +/- 0 mm reduziert werden. Abhängig von der individuellen Anatomie des Benutzers kann es sein, dass bei einer zierlichen Nase des Brillenträgers die Auflagerpunkte der Nasenauflagen in Trageposition von vorne gesehen in einer Ebene hinter dem zumindest einen Brillenglas liegen. Damit ist es möglich, dass während einer Belastung der Brille, also in einer belasteten Trageposition während einer äußeren Krafteinwirkung auf die Brille, die Dämpfungselemente in vertikaler Richtung zwischen dem Brillenglas und der Gesichtsvorderseite des Benutzers in vertikaler Richtung sogar höher als bis zur Unterkante des Brillenglases schwingen können, ohne dabei die Glasränder zu berühren.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- - **Fig. 1**: in einer isometrischen Ansicht schräg von vorne eine erste erfindungsgemäße Ausführungsform einer Brille mit einem einstückigen Brillenglas sowie mit zwei am Brillenglas befestigten Rahmenteilen, wobei die Nasenauflagen an den freien nasalen Rahmenenden der Dämpfungselemente angeordnet sind;
- - **Fig. 2**: die in Fig. 1 gezeigte Brille in einer Explosionsdarstellung von vorne mit einem linken und einem rechten Rahmenteil getrennt vom Brillenglas;
- - **Fig. 2A**: eine Detailansicht des in Fig. 2 strichpunktiert markierten Details A;
- - **Fig. 3**: in einer Ansicht von vorne die in Fig. 1 gezeigte Brille in einer unbelasteten Trageposition in Ruhelage der Brille;
- - **Fig. 4**: in einer Ansicht von vorne die in Fig. 1 gezeigte Brille in einer belasteten Trageposition während einer äußeren Krafteinwirkung auf die Brille;
- - **Fig. 5**: in einer Ansicht von vorne eine zweite erfindungsgemäße Ausführungsform einer Brille mit einem einstückigen Brillenglas sowie mit zwei am Brillenglas befestigten Rahmenteilen, wobei die nasalen Rahmenenden der Dämpfungselemente mit einem Mittelstück verbunden sind;
- - **Fig. 6**: in einer Ansicht von vorne eine dritte erfindungsgemäße Ausführungsform einer Brille mit zwei separaten Brillengläsern, die mit Nasenstegen miteinander verbunden sind, sowie mit zwei an den jeweiligen Brillengläsern befestigten Rahmenteilen, wobei die nasalen Rahmenenden der Dämpfungselemente mit einem Mittelstück verbunden sind;
- - **Fig. 7**: in einer Ansicht von vorne die in Fig. 3 gezeigte Brille in einer unbelasteten Trageposition in Ruhelage der Brille samt der strichliert angedeuteten Kontur des Kopfes eines Brillenträgers;
- - **Fig. 8**: in einer Ansicht von vorne die in Fig. 4 gezeigte Brille in einer belasteten Trageposition während einer äußeren Krafteinwirkung auf die Brille samt der strichliert angedeuteten Kontur des Kopfes eines Brillenträgers;
- - **Fig. 9**: in einer Ansicht von der Seite die in Fig. 7 gezeigte Brille in einer unbelasteten Trageposition in Ruhelage der Brille samt der strichliert angedeuteten Kontur des Kopfes eines Brillenträgers.

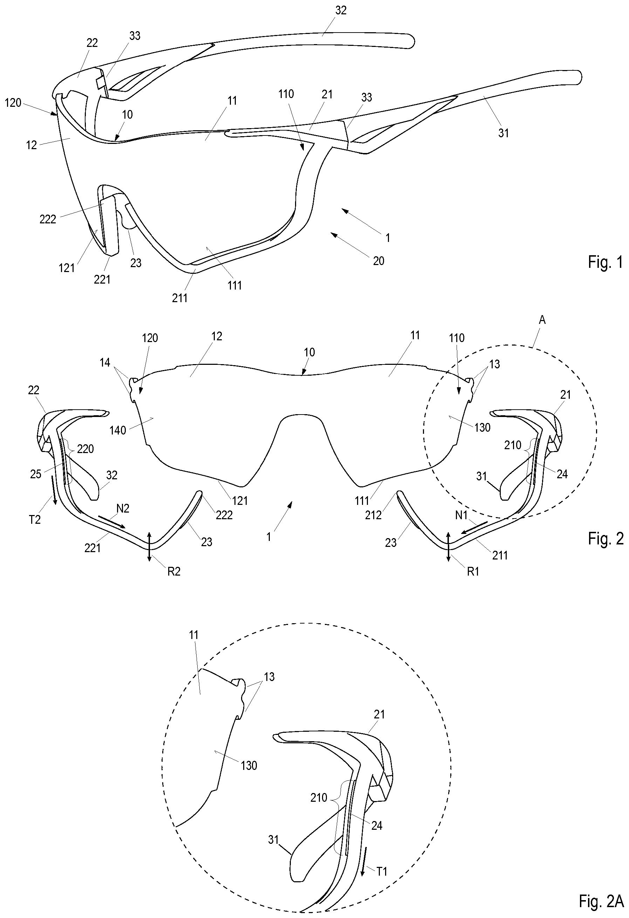

Die folgende detaillierte Figurenbeschreibung bezieht sich auf die in den Figuren 1 bis 4 gezeigte erste erfindungsgemäße Ausführungsform einer Brille 1. Die hier gezeigte Brille 1 ist als Sportbrille gestaltet und weist ein einstückiges, durchgehendes Brillenglas 10 aus einem bruchfesten Kunststoff auf. Das Brillenglas 10 weist einen linken Brillenglasabschnitt 11 sowie einen rechten Brillenglasabschnitt 12 auf. An einem lateralen Ende 110 des linken Brillenglasabschnitts 11 sind hier Passteile 13, 130 angeformt, welche zur mechanischen Befestigung mit einer Rahmeneinrichtung 20 bzw. mit einem korrespondierenden linken Rahmenteil 21 dienen. Ein unterer Rand 111 des linken Brillenglasabschnitts 11 bildet einen Konturabschnitt des Brillenglases.

Spiegelsymmetrisch dazu weist der rechte Brillenglasabschnitt 12 ein laterales Ende 120 auf, an dem hier Passteile 14, 140 angeformt sind, welche zur mechanischen Befestigung mit einer Rahmeneinrichtung 20 bzw. mit einem korrespondierenden rechten Rahmenteil 22 dienen. Ein unterer Rand 121 des rechten Brillenglasabschnitts 12 bildet einen Konturabschnitt des Brillenglases.

Die Rahmeneinrichtung 20 umfasst ein linkes Rahmenteil 21 mit einem linken Befestigungsabschnitt 210, einem daran befestigten linken Dämpfungselement 211 sowie einem linken nasalen Rahmenende 212.

Die Rahmeneinrichtung 20 umfasst weiters ein vom linken Rahmenteil 21 unabhängiges, separates rechtes Rahmenteil 22 mit einem rechten Befestigungsabschnitt 220, einem daran befestigten rechten Dämpfungselement 221 sowie einem rechten nasalen Rahmenende 222. Das linke 21 und das rechte 22 Rahmenteil sind spiegelsymmetrisch zueinander gestaltet und beispielsweise aus einem Thermoplast mit der Markenbezeichnung Grilamid TR 90^{®} einstückig gefertigt. An jedem der nasalen Rahmenenden 212 und 222 ist jeweils eine Nasenauflage 23 befestigt. Besonders vorteilhaft sind diese Nasenauflagen 23 mit einem innenliegenden Einlagematerial beispielsweise aus Metall ausgerüstet, welches von einem Benutzer einfach verformt werden kann. Damit können die Nasenauflagen 23 an die jeweilige Anatomie der Nase des Benutzers angepasst werden.

Der linke Befestigungsabschnitt 210 weist eine linke Befestigungsausnehmung 24 auf, in welche Befestigungsausnehmung 24 die am lateralen Ende 110 des linken Brillenglasabschnittes 11 angeordneten Passteile 13, 130 bzw. Konturabschnitte in zusammengebauter Lage der Brille 1 eingreifen. Hier wird eine form- und kraftschlüssige, lösbare Steckverbindung zum Verbinden des linken Rahmenteils 21 mit dem korrespondierenden Brillenglasabschnitt 11 des Brillenglases 10 gewählt.

Ebenso weist der rechte Befestigungsabschnitt 220 eine rechte Befestigungsausnehmung 25 auf, in welche Befestigungsausnehmung 25 die am lateralen Ende 120 des rechten Brillenglasabschnittes 12 angeordneten Passteile 14, 140 bzw. Konturabschnitte in zusammengebauter Lage der Brille 1 eingreifen. Hier wird - spiegelsymmetrisch - ebenfalls eine form- und kraftschlüssige, lösbare Steckverbindung zum Verbinden des rechten Rahmenteils 22 mit dem korrespondierenden Brillenglasabschnitt 12 des Brillenglases 10 gewählt. Die beiden Rahmenteile 21, 22 sind in zusammengebautem Zustand der Brille 1 nur mit dem dazwischenliegenden Brillenglas 10 miteinander verbunden.

An den beiden Rahmenteilen 21, 22 sind paarweise jeweils ein linker Brillenbügel 31 sowie ein rechter Brillenbügel 32 mittels Bügelscharnieren 33 beweglich befestigt. Mit einem Pfeil N1 ist die nasale Richtung N1 des linken Dämpfungselements 211 - in Bezug zur vorgesehenen Trageposition der Brille am Kopf eines Benutzers als "zur Nase des Benutzers weisend" - symbolisiert. Mit einem Pfeil N2 ist die nasale Richtung N2 des rechten Dämpfungselements 221 symbolisiert. Der variable Spaltabstand S1 zwischen dem linken Dämpfungselement 211 und dem unteren Glasrand 111 ist mit einem Pfeil S1 gekennzeichnet. Ebenso ist der variable Spaltabstand S2 zwischen dem rechten Dämpfungselement 221 und dem entsprechenden unteren Glasrand 121 mit einem Pfeil S1 gekennzeichnet.

Eine Auslenkungsrichtung R1 des linken Dämpfungselements 211, in der dieses frei schwingen kann, ist mit einem Doppelpfeil R1 symbolisiert.

Eine Auslenkungsrichtung R2, in der das rechte Dämpfungselement 221 frei schwingen kann, ist mit einem Doppelpfeil R2 symbolisiert.

In der hier gezeigten Ausführung erstreckt sich das jeweilige Dämpfungselement 211, 221 nicht nur in nasaler Richtung N1, N2 im Wesentlichen entlang der Unterkante 111, 121 des Brillenglases 10, sondern folgt auch der seitlichen Krümmung des Brillenglases 10 in temporaler bzw. seitlicher Richtung T1, T2 bis zum jeweiligen Befestigungsabschnitt 210, 220. Der Pfeil T1 symbolisiert die seitliche Richtung der Freistellung des linken Dämpfungselements 211. Gemäß dem anatomischen Begriff von "temporal" als "zur Schläfe eines Benutzers hinweisend" ist das linke Dämpfungselement 211 - ausgehend vom Befestigungsabschnitt 210 - zuerst in Pfeilrichtung T1 in einer seitlichen, streng genommen von der Schläfe des Benutzers wegweisenden Richtung seitlich nach unten ausgerichtet, um sich anschließend der gekrümmten bzw. gerundeten Kontur des Brillenglases 10 folgend in nasaler Richtung N1 zu erstrecken.

Umgekehrt symbolisiert der Pfeil T2 die seitliche Richtung der Freistellung des rechten Dämpfungselements 221. Auch das rechte Dämpfungselement 221 ist - ausgehend vom Befestigungsabschnitt 220 - zuerst in Pfeilrichtung T2 in einer seitlichen, von der Schläfe des Benutzers wegweisenden Richtung seitlich nach unten ausgerichtet, um sich anschließend der gekrümmten bzw. gerundeten Kontur des Brillenglases 10 folgend in nasaler Richtung N2 zu erstrecken.

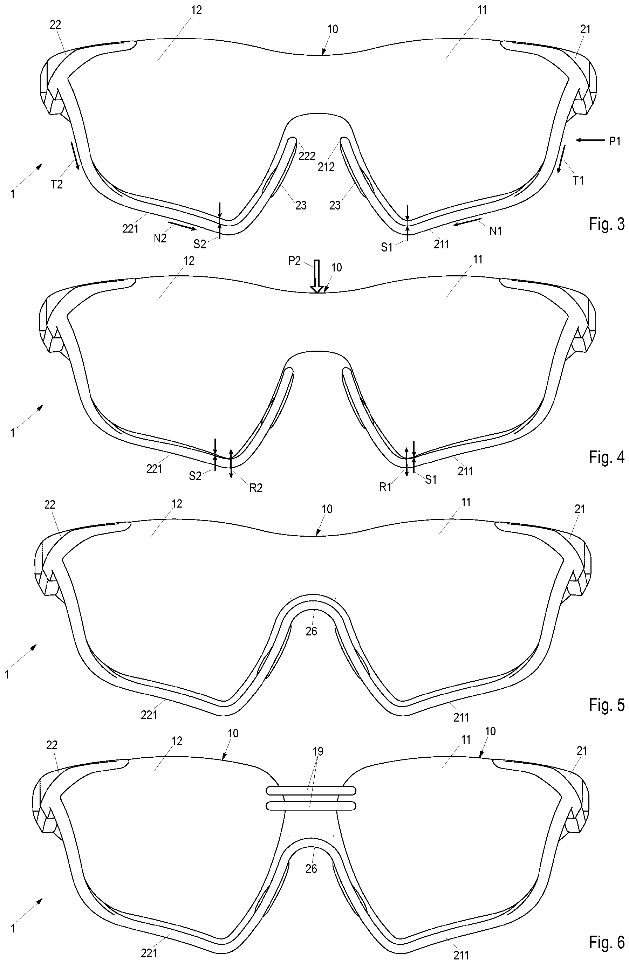

In einer unbelasteten Trageposition P1 in Ruhelage der Brille 1, wie diese beispielsweise in Fig. 3 dargestellt ist, weisen die Spaltabstände S1, S2 zwischen den Unterkanten 111, 121 des Brillenglases 10 und dem jeweiligen Dämpfungselement 211, 221 beispielsweise 2 mm und im Bereich zwischen den Unterkanten 111,121 und den Nasenauflagen 23 beispielsweise 3 mm auf.

Im belasteten Zustand unter Einwirkung einer äußeren Kraft P2, wie dies beispielsweise in Fig. 4 veranschaulicht ist, können während einer Erschütterung der Brille 1 die Spaltabstände S1, S2 zwischen den Unterkanten 111,121 des Brillenglases 10 und dem jeweiligen Dämpfungselement 211, 221 bzw. der jeweiligen Nasenauflage 23 auf +/- 0 mm reduziert werden. Vorteilhaft sind die Spaltabstände S1, S2 variabel, weshalb auch äußere Krafteinwirkungen P2, die nicht mittig von oben auf die Brille 1 einwirken, sondern beispielsweise in Form von Krafteinwirkungen von der Seite oder schräg von oben oder unten, besonders effektiv von den elastischen Dämpfungselementen 211, 221 gedämpft werden können. Beispielsweise kann in einer belasteten Trageposition P2, bei der die äußere Krafteinwirkung auf die Brille 1 hauptsächlich auf den linken Rahmenteil 21 einwirkt, der linke Spaltabstand S1 kurzfristig deutlich geringer sein als der rechte Spaltabstand S2. Die beiden Dämpfungselemente 211, 221 können vorteilhaft unabhängig voneinander ausgelenkt werden, um bestmöglich Erschütterungen der Brille 1 dämpfen zu können und derart einen hohen Tragekomfort des Brillenträgers zu gewährleisten.

Fig. 5 zeigt eine zweite erfindungsgemäße Ausführungsform einer Brille 1 mit einem einstückigen Brillenglas 10 sowie mit zwei am Brillenglas 10 befestigten Rahmenteilen 21, 22, wobei die nasalen Rahmenenden 212, 222 der Dämpfungselemente 211, 221 mit einem elastischen Mittelstück 26 verbunden sind. Das elastische Mittelstück 26 ist hier beispielsweise ein weicher Silikonschlauchabschnitt, der an den nasalen Rahmenenden 212, 222 befestigt ist und der einen besonders sicheren, rutschfesten Halt der Sportbrille in der Trageposition am Kopf eines Benutzers ermöglicht.

Fig. 6 zeigt eine dritte erfindungsgemäße Ausführungsform einer Brille 1 mit zwei separaten Brillengläsern 11,12, die mittels zweier Nasenstege 19 miteinander verbunden sind. An den Brillengläsern 11, 12 sind jeweils Rahmenteile 21, 22 befestigt, wobei die nasalen Rahmenenden 212, 222 der Dämpfungselemente 211, 221 mit einem Mittelstück 26 verbunden sind.

Ebenso kann in einer weiteren, nicht explizit gezeigten Ausführungsform einer erfindungsgemäßen Brille 1 mit zwei separaten Brillengläsern 11, 12 ein solches Mittelstück 26 auch fehlen. In dieser Gestaltungsvariante können klassische Brillen 1 mit separaten Brillengläsern 11, 12 mit den vorteilhaften Wirkungen der mit den Dämpfungselementen 211, 221 ausgerüsteten Rahmenteile 21, 22 kombiniert werden.

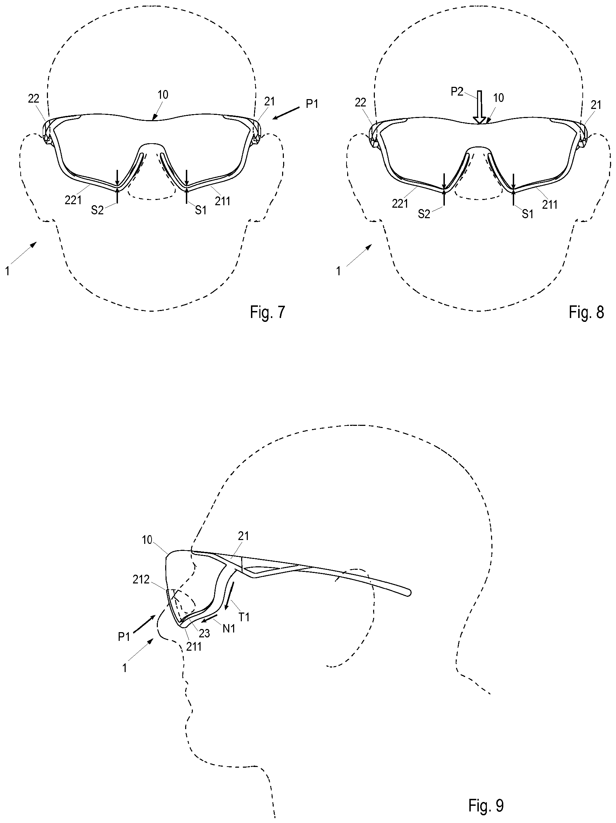

Fig. 7 zeigt die in Fig. 3 gezeigte Brille 1 in einer unbelasteten Trageposition P1 in Ruhelage der Brille 1 samt der strichliert angedeuteten Kontur des Kopfes eines Brillenträgers. Die Spaltabstände S1, S2 betragen hier in der unbelasteten Trageposition beispielsweise zwischen 2 mm und 3 mm.

Fig. 8 zeigt die in Fig. 4 gezeigte Brille 1 in einer belasteten Trageposition P2 während einer äußeren Krafteinwirkung, die als Pfeil P2 symbolisiert ist, samt der strichliert angedeuteten Kontur des Kopfes eines Brillenträgers. Die Spaltabstände S1, S2 betragen hier in der belasteten Trageposition beispielsweise kurzfristig +/- 0 mm von vorne gesehen. Die Nasenauflagen 23 liegen hier aufgrund der vergleichsweise schmalen, zierlichen Nase des Brillenträgers etwas zum Gesicht des Trägers nach hinten gewölbt hinter dem Brillenglas 10 auf der Nase auf. Dies ist auch aus der Seitenansicht von Fig. 9 ersichtlich. Somit berühren hier in der in belasteten Trageposition P2 gemäß Fig. 8 die Dämpfungselemente 211, 221 sowie die Nasenauflagen 23 auch während der äußeren Krafteinwirkung P2 nicht die Unterkanten 111,121 des Brillenglases 10.

### LISTE DER BEZUGSZEICHEN

- 1: Brille
- 10: Brillenglas
- 11: linker Brillenglasabschnitt bzw. linkes Brillenglas
- 12: rechter Brillenglasabschnitt bzw. rechtes Brillenglas
- 110: laterales Ende des linken Brillenglasabschnitts
- 111: unterer Rand des linken Brillenglasabschnitts
- 120: laterales Ende des rechten Brillenglasabschnitts
- 121: unterer Rand des rechten Brillenglasabschnitts
- 13, 130: Passteil des linken Brillenglases
- 14, 140: Passteil des rechten Brillenglases
- 19: Nasensteg
- 20: Rahmeneinrichtung
- 21: linkes Rahmenteil
- 210: linker Befestigungsabschnitt
- 211: linkes Dämpfungselement
- 212: linkes nasales Rahmenende
- 22: rechtes Rahmenteil
- 220: rechter Befestigungsabschnitt
- 221: rechtes Dämpfungselement
- 222: rechtes nasales Rahmenende
- 23: Nasenauflage
- 24: linke Befestigungsausnehmung
- 25: rechte Befestigungsausnehmung
- 26: Mittelstück
- 31: linker Brillenbügel
- 32: rechter Brillenbügel
- 33: Bügelscharnier
- N1: nasale Richtung des linken Dämpfungselements (Pfeil)
- N2: nasale Richtung des rechten Dämpfungselements (Pfeil)
- S1: Spaltabstand zwischen linkem Dämpfungselement und unterem Glasrand (Pfeil)
- S2: Spaltabstand zwischen rechtem Dämpfungselement und unterem Glasrand (Pfeil)
- P1: unbelastete Trageposition in Ruhelage der Brille
- P2: belastete Trageposition während einer Krafteinwirkung auf die Brille (Pfeil)
- R1: Auslenkungsrichtung des linken Dämpfungselements (Pfeil)
- R2: Auslenkungsrichtung des rechten Dämpfungselements (Pfeil)
- T1: temporale Richtung des linken Dämpfungselements (Pfeil)
- T2: temporale Richtung des rechten Dämpfungselements (Pfeil)

## Patentansprüche

1. Brille (1), umfassend
- zumindest ein Brillenglas (10) mit einem linken und einem rechten Brillenglasabschnitt (11, 12),
- eine Rahmeneinrichtung (20), welche ein linkes und ein rechtes Rahmenteil (21, 22) umfasst, wobei die Rahmeneinrichtung (20) in mechanischem Eingriff mit dem zumindest einen Brillenglas (10) steht und das linke Rahmenteil (21) dem linken Brillenglasabschnitt (11) sowie das rechte Rahmenteil (22) dem rechten Brillenglasabschnitt (12) zugeordnet ist,
- wobei jedes Rahmenteil (21, 22) einen Befestigungsabschnitt (210, 220) mit einer Befestigungsausnehmung (24, 25) aufweist, in welche Befestigungsausnehmung (24, 25) zumindest ein an einem lateralen Ende (110, 120) des jeweiligen Brillenglasabschnittes (11, 12) angeordnetes Passteil (13, 130, 14, 140) eingreift, **dadurch gekennzeichnet, dass**
- jedes Rahmenteil (21, 22) jeweils ein elastisch federndes Dämpfungselement (211, 221) aufweist, wobei jedes Dämpfungselement (211, 221) jeweils an einem Befestigungsabschnitt (210, 220) befestigt ist und sich in nasaler Richtung (N1, N2) der Brille (1) verlaufend entlang eines unteren Randes (111, 121) des jeweiligen Brillenglasabschnitts (11, 12) sowie vom unteren Rand (111, 121) unter Bildung eines variablen Spaltabstands (S1, S2) beabstandet bis zu einem nasalen Rahmenende (212, 222) erstreckt, wobei
- jedes Dämpfungselement (211, 221) zumindest in einer Richtung (R1, R2) elastisch flexibel auslenkbar ist und wobei
- an jedem der nasalen Rahmenenden (212, 222) jeweils eine Nasenauflage (23) angeordnet ist, welche Nasenauflage (23) dazu eingerichtet ist, in einer Trageposition (P1, P2) der Brille (1) an der Nase eines Benutzers anzuliegen und den jeweiligen Rahmenteil (21, 22) abzustützen.

2. Brille (1) nach Anspruch 1, **dadurch gekennzeichnet, dass** das Brillenglas (10) einstückig gefertigt ist und der linke und der rechte Brillenglasabschnitt (11, 12) miteinander verbunden sind.

3. Brille (1) nach Anspruch 1, **dadurch gekennzeichnet, dass** zwei separate Brillengläser (10) vorgesehen sind, wobei der linke und der rechte Brillenglasabschnitt (11, 12) als separate Brillengläser ausgeführt sind, die vorzugsweise mit zumindest einem dazwischenliegenden Nasensteg (19) miteinander verbunden sind.

4. Brille (1) nach einem der Ansprüche 1 bis 3, **dadurch gekennzeichnet, dass** das linke und das rechte Rahmenteil (21, 22) als separate Rahmenteile, vorzugsweise als spiegelsymmetrisch gestaltete separate Rahmenteile, ausgebildet sind.

5. Brille (1) nach einem der Ansprüche 1 bis 4, **dadurch gekennzeichnet, dass** die Rahmenteile (21, 22) ausschließlich an den lateralen Enden (110, 120) der jeweiligen Brillenglasabschnitte oder Brillengläser (11, 12) befestigt sind.

6. Brille (1) nach einem der Ansprüche 1 bis 5, **dadurch gekennzeichnet, dass** die Dämpfungselemente (211, 221) in einer Trageposition (P1) in Ruhelage der Brille (1) die jeweiligen Brillenglasabschnitte oder Brillengläser (11, 12) nicht berühren.

7. Brille (1) nach einem der Ansprüche 1 bis 6, **dadurch gekennzeichnet, dass** die Rahmenteile (21, 22) an ihren nasalen Rahmenenden (212, 222) mit einem Mittelstück (26), vorzugsweise mit einem elastischen Mittelstück, miteinander verbunden sind.

8. Brille (1) nach einem der Ansprüche 1 bis 7, **dadurch gekennzeichnet, dass** die Rahmenteile (21, 22) und/oder die elastisch federnden Dämpfungselemente (211, 221) aus einem Material hergestellt sind, welches einen Zug E-Modul von 1200 bis 7000 MPa, vorzugsweise von 1400 bis 3500 MPa, insbesondere von 1600 MPa, aufweist.

9. Brille (1) nach einem der Ansprüche 1 bis 8, **dadurch gekennzeichnet, dass** die Rahmenteile (21, 22) und/oder die elastisch federnden Dämpfungselemente (211, 221) aus einem Material hergestellt sind, welches eine Streckspannung von 30 bis 130 MPa, vorzugsweise von 40 bis 100 MPa, insbesondere von 60 MPa, aufweist.

10. Brille (1) nach einem der Ansprüche 1 bis 9, **dadurch gekennzeichnet, dass** die Rahmenteile (21, 22) und/oder die elastisch federnden Dämpfungselemente (211, 221) aus einem Material hergestellt sind, welches eine Streckdehnung von 2 bis 8 %, vorzugsweise von 3 bis 7 %, insbesondere von 6 %, aufweist.

11. Brille (1) nach einem der Ansprüche 1 bis 10, **dadurch gekennzeichnet, dass** die Rahmenteile (21, 22) und/oder die elastisch federnden Dämpfungselemente (211, 221) aus einem Material hergestellt sind, welches eine Bruchspannung von 30 bis 120 MPa, vorzugsweise von 40 bis 60 MPa, aufweist.

12. Brille (1) nach einem der Ansprüche 1 bis 11, **dadurch gekennzeichnet, dass** die Rahmenteile (21, 22) und/oder die elastisch federnden Dämpfungselemente (211, 221) aus einem Material hergestellt sind, welches eine Bruchdehnung größer als 2 %, vorzugsweise größer als 10 %, insbesondere größer als 50 %, aufweist.

13. Brille (1) nach einem der Ansprüche 1 bis 12, **dadurch gekennzeichnet, dass** die Rahmenteile (21, 22) und/oder die elastisch federnden Dämpfungselemente (211, 221) aus einem witterungsbeständigen Polyamidkunststoff, vorzugsweise einem cycloaliphatischen Polyamidkunststoff, hergestellt sind.

14. Brille (1) nach einem der Ansprüche 1 bis 13, **dadurch gekennzeichnet, dass** die federnden Dämpfungselemente (211, 221) in einer Trageposition (P1, P2) der Brille (1) am Kopf eines Benutzers ausgehend von dem jeweiligen Befestigungsabschnitt (210, 220) zuerst entgegen einer temporalen Richtung (T1, T2) seitlich am Kopf des Benutzers nach unten und anschließend in eine nasale Richtung (N1, N2) zur Nase des Benutzers verlaufen, sodass die Dämpfungselemente (211, 221) jeweils einen unteren Rahmenabschnitt bilden.

15. Brille (1) nach einem der Ansprüche 1 bis 14, **dadurch gekennzeichnet, dass** die federnden Dämpfungselemente (211, 221) jeweils eine frei schwingende Länge von 60 bis 100 mm, vorzugsweise von 70 bis 90 mm, aufweisen.

## Claims

1. Spectacles (1), comprising
- at least one spectacle glass (10) comprising a left and a right spectacle glass section (11, 12),
- a frame equipment (20) which comprises a left and a right frame part (21, 22), wherein the frame equipment (20) is in mechanical engagement with the at least one spectacle glass (10), the left frame part (21) being associated with the left spectacle glass section (11) and the right frame part (22) being associated with the right spectacle glass section (12),
- wherein each frame part (21, 22) has a fastening section (210, 220) comprising a fastening recess (24, 25), into which fastening recess (24, 25) at least one keying portion (13, 130, 14, 140) disposed at a lateral end (110, 120) of the respective spectacle glass section (11, 12) engages,
**characterized in that**
- each frame part (21, 22) has a respective elastically flexible damping element (211, 221), each damping element (211, 221) being fixed to a respective fastening section (210, 220) and extending along a lower edge (111, 121) of the respective spectacle glass section (11, 12) along the nasal direction (N1, N2) of the spectacles (1) and in a distance from the lower edge (111, 121), forming a variable clearance gap (S1, S2), until a nasal end (212, 222) of the frame, wherein
- each damping element (211, 221) is elastically flexibly deflectable in at least one direction (R1, R2), and wherein
- on each of the nasal frame ends (212, 222) a respective nose pad (23) is disposed, said nose pad (23) being configured to sit on the nose of a user in a wearing position (P1, P2) of the spectacles (1) and to support the respective frame part (21, 22).

2. The spectacles (1) as claimed in claim 1, **characterized in that** the spectacle glass (10) is made in one piece and the left and the right spectacle glass section (11, 12) are connected.

3. The spectacles (1) as claimed in claim 1, **characterized in that** two separate spectacle glasses (10) are provided, the left and right spectacle glass sections (11, 12) being realized as separate spectacle glasses, which preferably are connected by at least one intermediate nose bridge (19).

4. The spectacles (1) as claimed in any one of claims 1 to 3, **characterized in that** the left and right frame parts (21, 22) are realized as separate frame parts, preferably as separate frame parts of mirror-symmetrical conformation.

5. The spectacles (1) as claimed in any one of claims 1 to 4, **characterized in that** the frame parts (21, 22) are exclusively fixed at the lateral ends (110, 120) of the respective spectacle glass sections or spectacle glasses (11, 12).

6. The spectacles (1) as claimed in any one of claims 1 to 5, **characterized in that** the damping elements (211, 221), in a wearing position (P1) in a neutral position of the spectacles (1), do not come into contact with the respective spectacle glass sections or spectacle glasses (11,12).

7. The spectacles (1) as claimed in any one of claims 1 to 6, **characterized in that** the frame parts (21, 22) are connected to a central piece (26) at their nasal frame ends (212, 222), preferably to an elastic central piece.

8. The spectacles (1) as claimed in any one of claims 1 to 7, **characterized in that** the frame parts (21, 22) and/or the elastically flexible damping elements (211, 221) are made of a material which has a tensile modulus of elasticity of 1200 to 7000 MPa, preferably 1400 to 3500 MPa, in particular 1600 MPa.

9. The spectacles (1) as claimed in any one of claims 1 to 8, **characterized in that** the frame parts (21, 22) and/or the elastically flexible damping elements (211, 221) are made of a material which has a yield strength of 30 to 130 MPa, preferably 40 to 100 MPa, in particular 60 MPa.

10. The spectacles (1) as claimed in any one of claims 1 to 9, **characterized in that** the frame parts (21, 22) and/or the elastically flexible damping elements (211, 221) are produced from a material which has a yield strain of 2 % to 8 %, preferably 3 % to 7 %, in particular 6 %.

11. The spectacles (1) as claimed in any one of claims 1 to 10, **characterized in that** the frame parts (21, 22) and/or the elastically flexible damping elements (211, 221) are made of a material which has a breaking stress of 30 to 120 MPa, preferably 40 to 60 MPa.

12. The spectacles (1) as claimed in any one of claims 1 to 11, **characterized in that** the frame parts (21, 22) and/or the elastically flexible damping elements (211, 221) are made of a material which has an elongation at break of more than 2 %, preferably more than 10 %, in particular more than 50 %.

13. The spectacles (1) as claimed in any one of claims 1 to 12, **characterized in that** the frame parts (21, 22) and/or the elastically flexible damping elements (211, 221) are made of a weather-resistant polyamide plastic, preferably a cycloaliphatic polyamide plastic.

14. The spectacles (1) as claimed in any one of claims 1 to 13, **characterized in that** in a wearing position (P1, P2) of the spectacles (1) on a user's head, the resilient damping elements (211, 221) extend, starting from the respective fastening section (210, 220), firstly opposite to a temporal direction (T1, T2) laterally downward along the head of the user and subsequently in a nasal direction (N1, N2) towards the nose of the user, the damping elements (211, 221) thus respectively forming a lower frame section.

15. The spectacles (1) as claimed in any one of claims 1 to 14, **characterized in that** the resilient damping elements (211, 221) respectively have a free swinging length of 60 to 100mm, preferably 70 to 90mm.

## Revendications

1. Lunettes (1) comprenant
- au moins un verre de lunettes (10) comportant une partie de verre de lunettes gauche et une partie de verre de lunettes droite (11, 12),
- un dispositif de cadre (20) qui comprend une partie de cadre gauche et une partie de cadre droite (21, 22), le dispositif de cadre (20) étant en prise mécanique avec ledit au moins un verre de lunettes (10), et la partie de cadre gauche (21) étant associée à la partie de verre de lunettes gauche (11) et la partie de cadre droite (22) à la partie de verre de lunettes droite (12),
- chaque partie de cadre (21, 22) comportant une partie de fixation (210, 220) avec un évidement de fixation (24, 25), au moins un élément d'accouplement (13, 130, 14, 140) disposé à une extrémité latérale (110, 120) de la partie de verre de lunettes respective (11, 12) s'engageant dans ledit évidement de fixation (24,25),
**caractérisées en ce que**
- chaque partie de cadre (21, 22) présente un élément d'amortissement élastique (211, 221) respectif, chaque élément d'amortissement (211, 221) étant fixé respectivement à une partie de fixation (210, 220) et s'étendant dans la direction nasale (N1, N2) des lunettes (1), le long d'un bord inférieur (111, 121) de la partie de verre de lunettes respective (11, 12) ainsi qu'à distance du bord inférieur (111, 121) en formant une distance de fente variable (S1, S2) jusqu'à une extrémité de cadre nasale (212,222), où
- chaque élément d'amortissement (211, 221) est déviable de manière élastique et flexible au moins dans une direction (R1, R2) et
- à chacune des extrémités de cadre nasales (212, 222) est disposé un appui nasal (23) respectif, ledit appui nasal (23) étant conçu pour s'appliquer contre le nez d'un utilisateur dans une position de port (P1, P2) des lunettes (1) et soutenir la partie de cadre (21, 22) respective.

2. Lunettes (1) selon la revendication 1, **caractérisées en ce que** le verre de lunettes (10) est fabriqué d'une seule pièce et les parties de verre de lunettes gauche et droite (11, 12) sont reliées entre elles.

3. Lunettes (1) selon la revendication 1, **caractérisées en ce que** deux verres de lunettes (10) séparés sont prévues, la partie de verre de lunettes gauche et la partie de verre de lunettes droite (11, 12) étant réalisées sous forme de verres de lunettes séparés, qui sont de préférence reliés entre eux par au moins un pont de nez (19) situé entre eux.

4. Lunettes (1) selon l'une quelconque des revendications 1 à 3, **caractérisées en ce que** les parties de cadre gauche et droite (21, 22) sont conçues comme des parties de cadre séparées, de préférence comme des parties de cadre séparées conçues avec une symétrie spéculaire.

5. Lunettes (1) selon l'une quelconque des revendications 1 à 4, **caractérisées en ce que** les parties de cadre (21, 22) sont fixés exclusivement aux extrémités latérales (110, 120) des parties de verres de lunettes ou des verres de lunettes (11, 12) respectives.

6. Lunettes (1) selon l'une quelconque des revendications 1 à 5, **caractérisées en ce que** les éléments d'amortissement (211, 221) ne sont pas en contact avec les parties de verres de lunettes ou les verres de lunettes (11, 12) respectives dans une position de port (P1) au repos des lunettes (1).

7. Lunettes (1) selon l'une quelconque des revendications 1 à 6, **caractérisées en ce que** les parties de cadre (21, 22) sont reliées entre elles à leurs extrémités de cadre nasales (212, 222) par une pièce centrale (26), de préférence par une pièce centrale élastique.

8. Lunettes (1) selon l'une quelconque des revendications 1 à 7, **caractérisées en ce que** les parties de cadre (21, 22) et/ou les éléments d'amortissement élastiques (211, 221) sont en un matériau qui présente un module d'élasticité en traction de 1200 à 7000 MPa, de préférence de 1400 à 3500 MPa, en particulier de 1600 MPa.

9. Lunettes (1) selon l'une quelconque des revendications 1 à 8, **caractérisées en ce que** les parties de cadre (21, 22) et/ou les éléments d'amortissement élastiques (211, 221) sont en un matériau qui présente une contrainte d'étirement de 30 à 130 MPa, de préférence de 40 à 100 MPa, en particulier de 60 MPa.

10. Lunettes (1) selon l'une quelconque des revendications 1 à 9, **caractérisées en ce que** les parties de cadre (21, 22) et/ou les éléments d'amortissement élastiques (211, 221) sont en un matériau qui présente un allongement à la traction de 2 à 8 %, de préférence de 3 à 7 %, en particulier de 6 %.

11. Lunettes (1) selon l'une quelconque des revendications 1 à 10, **caractérisées en ce que** les parties de cadre (21, 22) et/ou les éléments d'amortissement élastiques (211, 221) sont en un matériau qui présente une contrainte de rupture de 30 à 120 MPa, de préférence de 40 à 60 MPa.

12. Lunettes (1) selon l'une quelconque des revendications 1 à 11, **caractérisées en ce que** les parties de cadre (21, 22) et/ou les éléments d'amortissement élastiques (211, 221) sont en un matériau qui présente un allongement à la rupture supérieur à 2 %, de préférence supérieur à 10 %, en particulier supérieur à 50 %.

13. Lunettes (1) selon l'une quelconque des revendications 1 à 12, **caractérisées en ce que** les parties de cadre (21, 22) et/ou les éléments d'amortissement élastiques (211, 221) sont en une matière plastique polyamide résistante aux intempéries, de préférence une matière plastique polyamide cycloaliphatique.

14. Lunettes (1) selon l'une quelconque des revendications 1 à 13, **caractérisées en ce que**, dans une position de port (P1, P2) des lunettes (1) sur la tête d'un utilisateur, les éléments d'amortissement élastiques (211, 221) s'étendent depuis la partie de fixation respective (210, 220), d'abord dans le sens contraire à une direction temporelle (T1, T2) sur le côté de la tête de l'utilisateur vers le bas et ensuite dans une direction nasale (N1, N2) vers le nez de l'utilisateur, de sorte que les éléments d'amortissement (211, 221) forment des parties de cadre inférieure respectives.

15. Lunettes (1) selon l'une quelconque des revendications 1 à 14, **caractérisées en ce que** les éléments d'amortissement élastiques (211, 221) ont chacun une longueur libre d'oscillation de 60 à 100 mm, de préférence de 70 à 90 mm.
